# EUROPEAN PATENT APPLICATION

(11) **EP 1 549 009 A1**
(43) Date of publication of application: **29.06.2005**
(21) Application number: 04029492.8
(22) Date of filing: 13.12.2004
(51) Int. Cl.: H04L 27/26, H04B 7/08

(54) **Estimation of a transmission path in a diversity receiver by means of pilot signals**

(30) Priority: 25.12.2003 JP 2003429139
(71) Applicant: Pioneer Corporation, Meguro-ku, Tokyo (JP)
(72) Inventor: Hoshino, Hironobu, Kawagoe-shi Saitama-ken 350-8555 (JP)
(74) Representative: Bohnenberger, Johannes, Dr.

(57) **Abstract**

When estimating a transmission route characteristic in accordance with the information of a received transmission signal, it is desired to correctly estimate the transmission route characteristic even if an operation of changing a reception condition is performed. A received transmission signal is converted into an intermediate frequency signal by selecting an OFDM signal of a desired wave through an RF tuner (403). After a digital conversion in ADC (404), OFDM demodulating means (405) produces a modulated wave symbol signal of an orthogonal frequency signal. Extracting means (408) extracts pilot signals and stores them as two or more symbols in storing means (410). Transmission route characteristic estimating means (409) estimates a transmission route characteristic in accordance with the pilot signals of one or more symbols stored in the storing means (410). Second control means (411) clears the information of pilot signals of one or more past symbols stored in the storing means (410) at the time of changing a reception condition.

## Description

### BACKGROUND OF THE INVENTION

The present invention relates to a receiver, a receiving method, a reception control program, and a storage medium.

In recent years, an OFDM (Orthogonal Frequency Division Multiplexing) system strong against multipass or fading has been adopted in the ground wave digital broadcasting. In order to ensure a stable reception of such a ground wave digital broadcasting on a mobile body such as car or the like, there has been provided a receiver adopting a diversity reception technique for performing an appropriate switchover among a plurality of antennas (for example, as disclosed in Japanese Unexamined Patent Application Publication No. 2003-143100).

Further, there has been provided a receiving apparatus attempting to obtain an improvement in its demodulating performance by supervising pilot signals of received OFDM signals, and judging a signal which is being disturbed (for example, as disclosed in Japanese Unexamined Patent Application Publication No. Hei 11-252040). Such receiving apparatus stores pilot signals of a plurality of symbols in a memory, and has a function of estimating a transmission route characteristic by comparing the amplitude and phase of the pilot signals of the plurality of symbols with a known value.

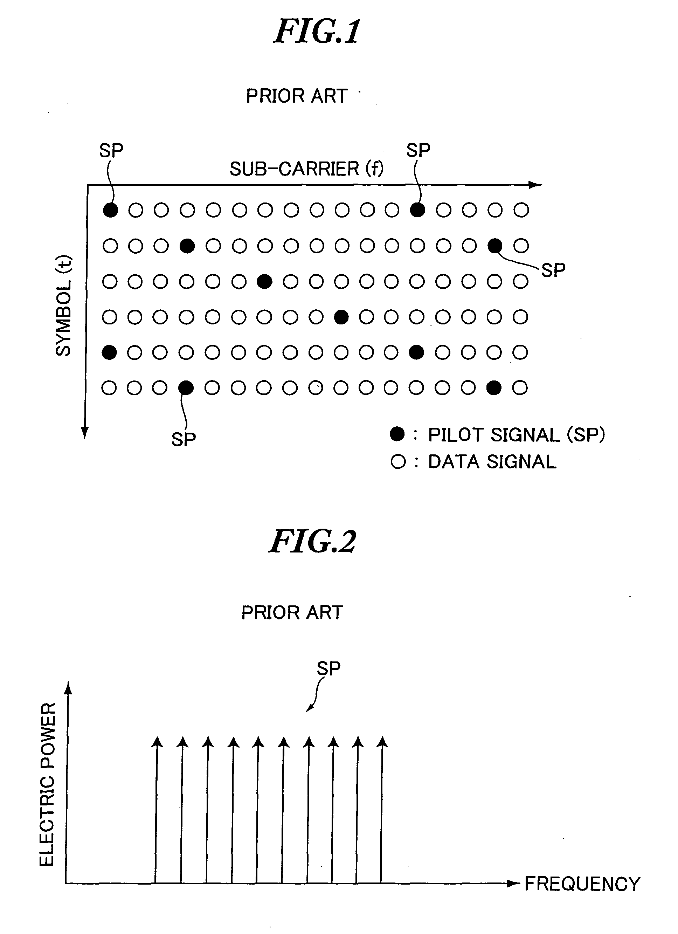

First, the details of a digital broadcasting utilizing a receiver and a receiving method of the present invention will be described with reference to Fig.1 which is a chart showing an arrangement of the pilot signals in an OFDM transmission system.

In Fig.1, the vertical axis represents symbols (equivalent to time t), while the horizontal axis represents sub carries (equivalent to frequency f). With regard to the OFDM transmission system (ISDB-T) utilized in the ground wave digital broadcasting or the like, the pilot signals whose amplitude and phase are known in advance (SP: Scattered Pilot) , are regularly inserted into data signal sequences at predetermined positions on the frequency axis and the time axis on the transmitting side. In Fig.1, black circles "•" represent pilot signals SP, white circles "o" represent data signals. By comparing the amplitude and phase of the pilot signals SP contained in the data signal sequences with a known value obtained in advance, it is possible for the receiving side to estimate the characteristic of an actual transmission route transmitting the data signals.

Fig. 2 is a chart showing the frequency characteristics of the pilot signals transmitted by the transmitting side. In Fig.2, the vertical axis represents an electric power, while the horizontal axis represents frequency. If the characteristic of the transmission route is not distorted and thus acts as an ideal one, the electric powers corresponding to different frequencies of respective pilot signals SP will be uniform even on the receiving side, as shown in Fig. 2.

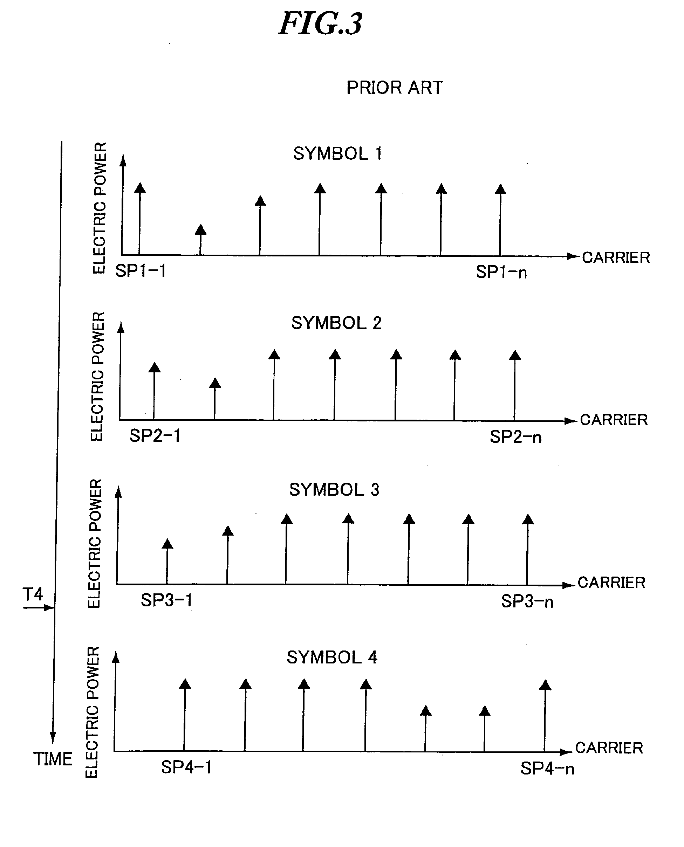

Fig.3 is a time chart showing a procedure for estimating a transmission route characteristic using the pilot signals of a plurality of symbols. In fact, Fig.3 shows the state of the pilot signals contained in the respective symbols 1 to 4 when there are a plurality of symbols (the number of symbols n = 4) as arranged from the top to the bottom in the chart. Namely, when the pilot signals SP are inserted at a rate of 1/3 in the frequency direction, and at a rate of 1/4 in the time direction (as shown in Fig. 1), it is possible to estimate the transmission route characteristic by utilizing the pilot signals of 4 symbols. In Fig. 3, the pilot signals SP of symbol 1 are SP1-1, SP1-2, ... SP1-n, and similarly, the pilot signals SP of symbol 4 are SP4-1, SP4-2, ... SP4-n. Further, in Fig. 3, the vertical axis represents time, and the horizontal axis represents carrier (frequency). In addition, the height direction of the pilot signals in each symbol represents an electric power. Although on the transmitting side, the electric powers of the pilot signals of respective symbols are uniform, they will be different from each other on the receiving side due to a distortion or the like occurred on the transmission route, as shown in Fig. 3.

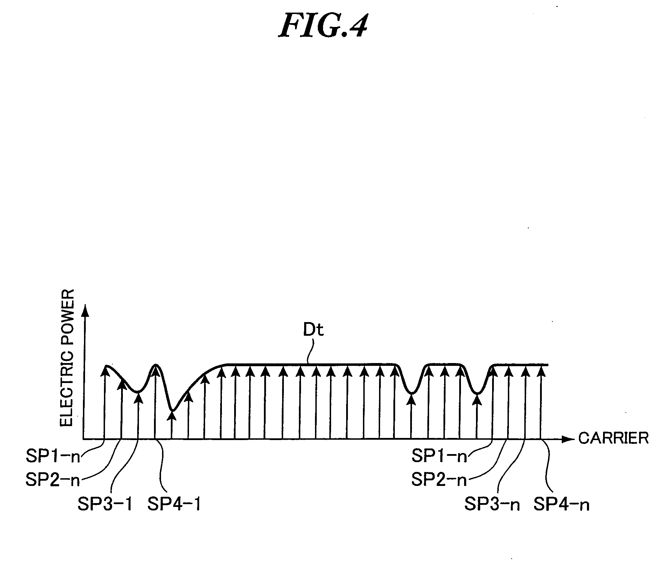

The pilot signals SP of the four symbols shown in Fig. 3 are filter-processed in the carrier direction by virtue of transmission route characteristic estimating means (not shown), thereby estimating their transmission route characteristics. Fig. 4 is a chart showing an estimated transmission route characteristic. As shown in Fig. 4, the pilot signals which are contained in the four symbols and inputted per time lapse, are aligned in the order of SP1-1, SP2-1, SP3-1, SP4-1, SP1-2, SP2-2, ..., SP4-n, and then filtered, thereby making it possible to estimate a change in the reception state of a transmitted signal, and a distortion on the transmission route due to a disturbing wave such as multipass or the like. Besides, in Fig. 4, a curve Dt interpolated among the pilot signals SP1-1 to SP4-n of each carrier, represents a transmission route characteristic. Moreover, the curve Dt also indicates the gain of a received signal with respect to a transmitted signal if the horizontal axis represents a frequency and the vertical axis represents a gain.

However, with regard to the above-described prior art, in the middle of a process for obtaining the information of pilot signals of a plurality of symbols set for estimating a transmission route, when a diversity operation for switching over antennas has been started, a mistaken transmission route characteristic might be estimated by using past information of the pilot signals obtained before the antenna switchover.

The aforementioned problem existing in the prior art will be explained in detail below. Namely, when estimating a transmission route characteristic using four symbols, the information of the pilot signals SP during a period of symbols 1 to 4 is stored in a memory (not shown). Here, it may be considered that an operation of changing a reception condition is performed and an antenna switchover is carried out at the time of reception of symbol 4 (time T4) shown in Fig. 3. Even in such a case, a transmission route characteristic as shown in Fig. 4 is derived, and the information of the pilot signals SP (SP1, SP2, SP3) in relation to symbols 1 to 3 is used for estimating a past transmission route characteristic, but not useful for estimating a transmission route characteristic after changing a reception condition. When utilizing such unnecessary information to carry out a processing such as decoding and equalization, there has been a problem of causing an adverse effect such as worsening an SN ratio (SNR) and producing an error on the result of the decoding.

### SUMMARY OF THE INVENTION

It is an object of the present invention that when estimating a transmission route characteristic in accordance with the information of a received transmission signal, a transmission route characteristic can be correctly estimated even if an operation of changing a reception condition is performed.

According to one aspect of the present invention, there is provided a receiver comprising: a plurality of antennas for receiving a transmission signal; received signal output means for outputting a received signal using one or more of the plurality of antennas; first control means for controlling a reception condition of the received signal output means; storing means for storing the information of the received signal; transmission route characteristic estimating means for estimating a transmission route characteristic in accordance with the information of the received signal stored in the storing means; and signal processing means for processing the received signal in accordance with the transmission route characteristic estimated by the transmission route characteristic estimating means. In particular, when the reception condition of the received signal output means is changed by the first control means, the transmission route characteristic estimating means operates to estimate a transmission route characteristic based on a changed reception condition, without using the information of the received signal stored before the reception condition is changed.

According to another aspect of the present invention, there is provided a receiver comprising: a plurality of antennas for receiving a transmission signal; received signal output means for outputting a received signal using one or more of the plurality of antennas; control means for controlling a reception condition of the received signal output means; storing means for storing the information of the received signal; transmission route characteristic estimating means for estimating a transmission route characteristic in accordance with the information of the received signal stored in the storing means; and signal processing means for processing the received signal in accordance with the transmission route characteristic estimated by the transmission route characteristic estimating means. In particular, when the reception condition of the received signal output means is changed by the control means, the transmission route characteristic estimating means operates to estimate a transmission route characteristic, in a manner such that the information of the received signal stored before the reception condition is changed, can affect the estimation of the transmission route characteristic, at a lower level than the information of the received signal stored after the reception condition is changed.

According to a further aspect of the present invention, there is provided a receiving method comprising: a received signal outputting step of outputting a received signal using one or more of a plurality of antennas for receiving a transmission signal; a controlling step of controlling a reception condition of the received signal outputting step; a storing step of storing the information of the received signal; a transmission route characteristic estimating step of estimating a transmission route characteristic in accordance with the information of the received signal stored in the storing means; and a signal processing step of processing the received signal in accordance with the transmission route characteristic estimated in the transmission route characteristic estimating step. In particular, when the reception condition of the received signal outputting step is changed in the controlling step, the transmission route characteristic estimating step estimates a transmission route characteristic, without using the information of the received signal stored before the reception condition is changed.

According to one more aspect of the present invention, there is provided a receiving method comprising: a received signal outputting step of outputting a received signal using one or more of a plurality of antennas for receiving a transmission signal; a controlling step of controlling a reception condition of the received signal outputting step; a storing step of storing the information of the received signal; a transmission route characteristic estimating step of estimating a transmission route characteristic in accordance with the information of the received signal stored in the storing step; and a signal processing step of processing the received signal in accordance with the transmission route characteristic estimated in the transmission route characteristic estimating step. In particular, when the reception condition of the received signal outputting step is changed in the controlling step, the transmission route characteristic estimating step estimates a transmission route characteristic, in a manner such that the information of the received signal stored before the reception condition is changed, can affect the estimation of the transmission route characteristic, at a lower level than the information of the received signal stored after the reception condition is changed.

According to one more aspect of the present invention, there is provided a reception control program which enables a computer to execute the receiving method mentioned above.

According to one more aspect of the present invention, there is provided a storage medium having stored therein the reception control program mentioned above.

### BRIEF DESCRIPTION OF THE DRAWINGS

These and other objects and advantages of the present invention will become clear from the following description with reference to the accompanying drawings, wherein:
Fig. 1 is a chart showing an example of an arrangement of pilot signals in an OFDM transmission system;
Fig. 2 is a chart showing a frequency characteristic of pilot signals transmitted by transmitting side;
Fig. 3 is a time chart showing a procedure for estimating a transmission route characteristic using pilot signals of two or more symbols;
Fig. 4 is a chart showing an estimated transmission route characteristic;
Fig. 5 is a block diagram showing an overall arrangement of a receiver formed according to one embodiment of the present invention;
Fig. 6 is a flow chart showing a processing for estimating a transmission route characteristic according to Embodiment 1;
Fig. 7 is a time chart showing an operation of storing pilot signals of two or more symbols;
Fig. 8 is a chart showing a memory clearing operation performed on storing means during an operation of changing a reception condition;
Fig. 9 is a chart showing the information of pilot signals read from storing means at the time of estimating a transmission route characteristic;
Fig. 10 is a time chart showing a procedure for estimating a transmission route characteristic using pilot signals of two or more symbols according to Embodiment 2 of the present invention;
Fig. 11-1 is a chart showing transmission route characteristics estimated in accordance with past information;
Fig. 11-2 is a chart showing a transmission route characteristic estimated in accordance with information obtained after changing a reception condition; and
Fig. 11-3 is a chart showing transmission route characteristics obtained after taking into account certain effect.

### DETAILED DESCRIPTION OF THE PREFERRED EMBODIMENTS

In the following, description will be given in detail to explain a preferred embodiment of a receiver and a receiving method according to the present invention.

It is an object of this embodiment to estimate, at the time of estimating a transmission route characteristic based on the information of pilot signals of a plurality of symbols, a correct transmission route characteristic even when a reception condition has been changed. However, as the information of a received signal, it is also allowed to use an electric power, amplitude and phase or the like of a received signal other than the information of the pilot signals.

Here, a reception condition will be decided by an antenna if the receiver is an antenna changeover type, but will be decided by a phase difference and a level of a signal if the receiver is a phase difference feeding type. Further, "changing a reception condition" means to change the state (level, delay or the like) of a received signal by performing an antenna switchover or adjusting the phase and the level of the signal.

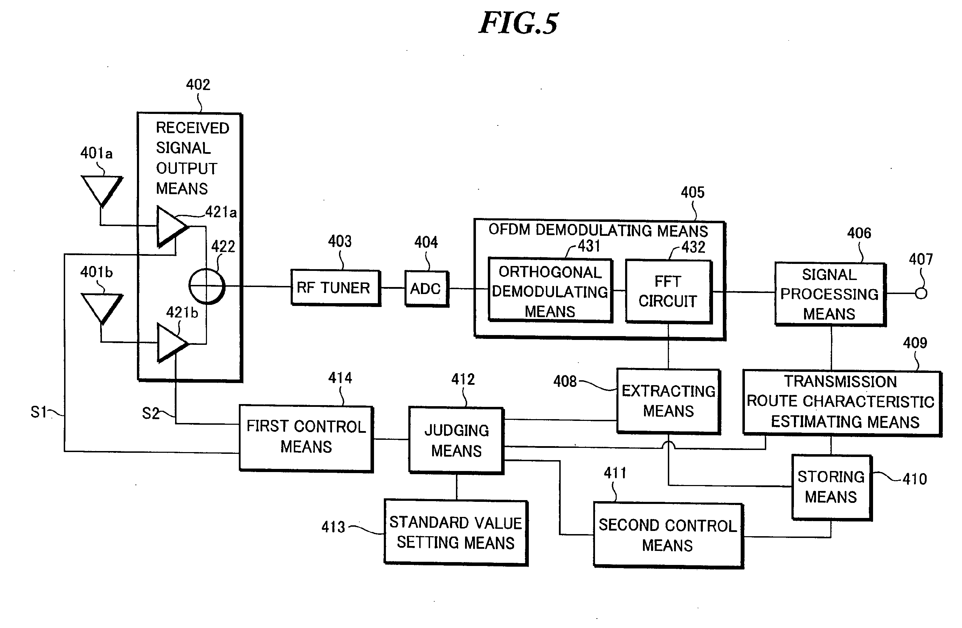

Next, description will be given to explain an embodiment of the present invention, with reference to Fig. 5 which is a block diagram showing an entire structure of the receiver formed according to the present embodiment.

Transmission signals transmitted through an OFDM transmission system are received by a plurality of antennas 401a and 401b. Actually, the number of antennas in a diversity reception system may be two or more. Received signal output means 402 selects a transmission signal received by one of the antennas 401a, 401b selected in accordance with one of selection signals S1, S2 outputted from first control means 414 and outputs the same to an RF tuner 403. The received signal output means 402 comprises AGC amplifiers 421a, 421b and an adder 422, and operates to lower, in accordance with selection signals S1 and S2, the gains of AGC amplifiers 421a, 421b provided in connection with the antennas 401a, 401b. In this way, the received signal output means 402 enables the AGC amplifiers 421a and 421b to have a switch function, forming an antenna switchover system which selects one of the antennas 401a and 401b. However, it is also possible to form an arrangement capable of synthesizing transmission signals using a phase difference feeding system.

The RF tuner 403 comprises a filter, a gain-variable amplifier, an oscillator, a mixer, and the like (all not shown). In fact, such an RF tuner 403 selects a desired OFDM signal from transmission signals selected by the received signal output means 402, and outputs an OFDM signal having an intermediate frequency to an ADC 404.

The ADC 404 performs an analog-to-digital conversion on an intermediate frequency transmission signal outputted from the RF tuner 403, and outputs the same to OFDM demodulating means 405. Here, the OFDM demodulating means 405 comprises an orthogonal demodulating unit 431 and an FFT circuit 432. The orthogonal demodulating unit 431 converts a digitized transmission signal into a base band signal (complex base band OFDM signal) . The base band signal is then inputted into the FFT circuit 432, so as to extract a signal contained in an FFT window period determined in advance, and perform an FFT (fast Fourier transform), thereby converting the signal into one on the frequency axis. In this way, it is possible to obtain the respective modulated wave symbol signals of a plurality of orthogonal frequency signals forming the OFDM signal. Further, signal processing means 406, after demodulating the modulated wave symbol signals and thus obtaining symbol data, performs a decoding and thus reproduces the symbol data which is then outputted through an output terminal 407.

Extracting means 408 has a function of extracting pilot signals, and extracts complex carrier pilot signals (SP) from signals (carriers) demodulated by the OFDM demodulating means 405. Thepilot signals extracted by the extracting means 408 are stored, as a plurality of symbols, in storingmeans 410 for storing the information of pilot signals. Such information of pilot signal consists of amplitude and phase. Actually, the storing means 410 is comprised of a memory such as a RAM both readable and writable, and stores pilot signals SP of a plurality of symbols as shown in Fig. 3.

Transmission route characteristic estimating means 409 estimates a transmission route characteristic according to pilot signals SP of a plurality of symbols (for example, the number of symbols n = 4) stored in the storing means 410. The estimated transmission route characteristic is used as information for performing an equalization processing in the signal processing means 406.

Second control means 411 controls the reading and writing of pilot signals in the storing means 410.

Judging means 412 compares a kind of information (such as reception electric power, SN ratio and the like) obtained from pilot signals SP extracted by the extracting means 408 with a standard value set by standard value setting means 413, and outputs a comparison result to the first control means 414. The first control means 414 outputs selection signals S1 and S2 to the AGC amplifiers 421a and 421b in accordance with the comparison result, and performs an operation of changing a reception condition by selecting one of the antennas 401a and 401b through a selective changeover. For example, such an operation of changing a reception condition may be performed in one symbol as the smallest unit. In this way, it is possible to perform a reception using one of the antennas 401a and 401b which is in an optimal reception state.

Here, a standard value to be set by the standard value setting means 413 is for example the value of an ideal electric power of a pilot signal SP. In addition, a standard value can also be set as a value capable of judging a reception condition such as SN ratio and bit error rate.

Actually, an operation of changing a reception condition is to select one of the antennas 401a and 401b which is in an optimal reception condition, so as to constantly stabilize a received transmission signal. On the other hand, once a distortion such as a multipass, fading and the like occurs in a transmission route, electric powers of pilot signals SP will become un-uniform (as shown in Fig. 3), hence lowering electric powers of some pilot signals SP.

Next, description will be given in detail to explain an operation of changing a reception condition, using the above-described arrangement.

### [Embodiment 1]

Embodiment 1 will be described with a prerequisite that a reception system is an antenna changeover type which allows the received signal output means 402 to select one of the antennas 401a and 401b. The judging means 412 compares a reception electric power obtained from a pilot signal SP extracted by the extracting means 408 with a standard value set by the standard value setting means 413. If the value of a reception electric power is lower than a preset standard value, a judgment result for performing a selective changeover between the antennas 401a and 401b is outputted to the first control means 414 which operates to change the reception condition of the received signal output means 402. In more detail, if a reception electric power is lower than a standard value (60 dBm), the judging means 412 will output the comparison result to the first control means 414 to start an operation of changing a reception condition.

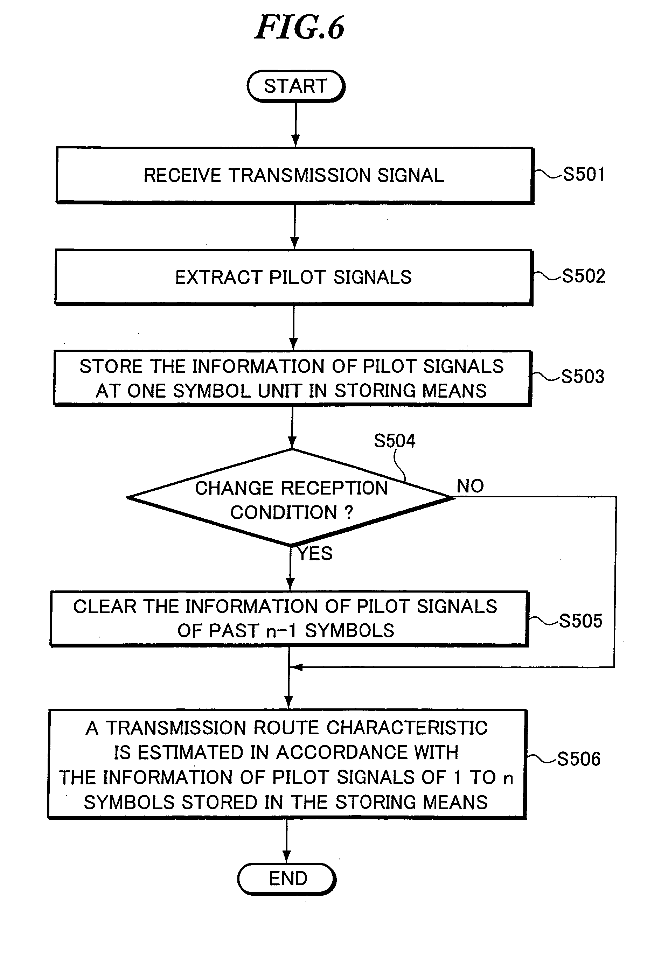

Next, description will be given to explain how to estimate a transmission route characteristic after having performed an operation of changing a reception condition. Fig. 6 is a flow chart showing how to estimate a transmission route characteristic according to Embodiment 1. As shown, once a transmission signal is received (Step S501), such signal is processed by the system shown in Fig. 5 and demodulated by the FFT circuit 432 of the OFDM demodulating means 405. The extracting means 408 extracts pilot signals SP from the signals demodulated by the OFDM demodulating means 405 (Step S502).

The extracted pilot signals SP are stored at 1-symbol units in the storing means 410 (Step S503) . The second control means 411 operates to store pilot signals SP of several symbols corresponding to the above-mentioned number of symbols (n = 4) in the storing means 410. As described with reference to Fig. 1, when pilot signals SP are inserted into transmission signal at a rate of 1/3 in the frequency direction and at a rate of 1/4 in the time direction, pilot signals of four symbols will be stored in the storing means 410.

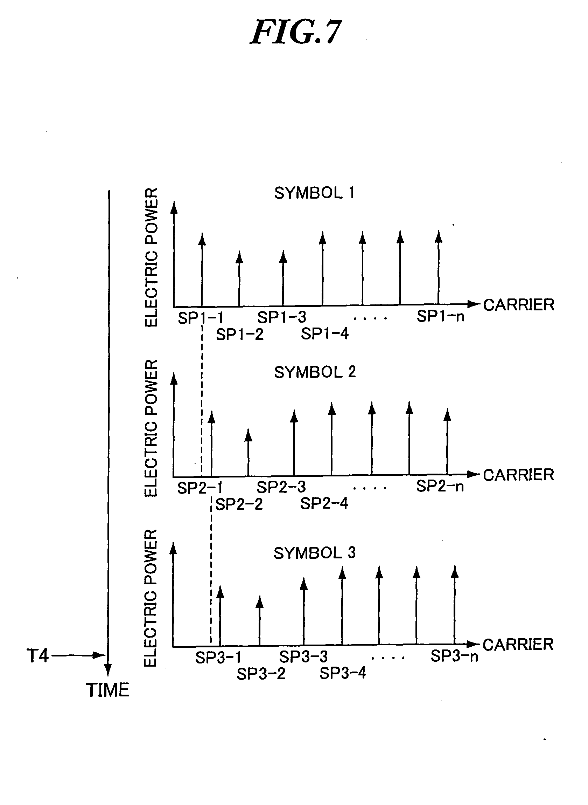

Fig. 7 is a time chart showing an operation of storing pilot signals of two or more symbols. As shown, pilot signals SP are stored successively in the same manner as shown in Fig. 3. Specifically, Fig. 7 shows that pilot signals of three symbols from symbol 1 to symbol 3 have been stored. However, when the information of pilot signals of a further (one) symbol has been newly stored, the information of pilot signals of the oldest (one) symbol will be erased (updated) . Subsequently, the judging means 412 compares the pilot signals with a standard value stored in the standard value setting means 413 in view of their reception electric powers, thereby determining whether there should be an operation of changing a reception condition (Step S504).

As a result of the comparison performed by the judging means 412, if an operation of changing a reception condition is to be started (Step S504: Yes), the second control means 411 will clear the information of pilot signals SP of past (n-1) symbols stored in the storing means 410 (Step S505).

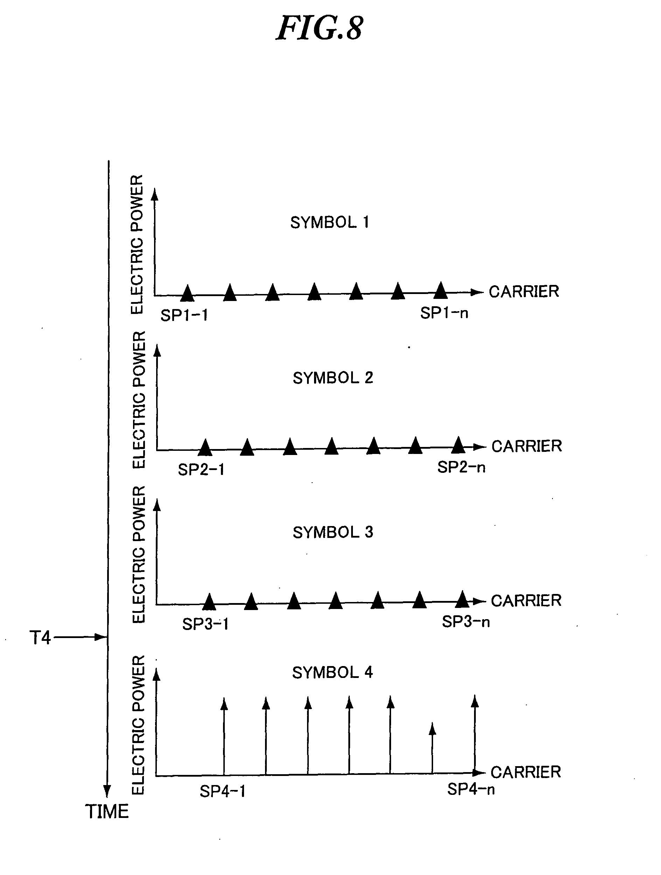

Fig. 8 is another time chart showing a memory clearing operation of storing means at the time of an operation of changing a reception condition. As shown, an operation of changing a reception condition is performed at the time of receiving the symbol 4 (period T4), exhibiting a state in which an antenna changeover has been performed. At this time, the information of the pilot signals SP1 (SP1-1 to SP1-n), SP2 (SP2-1 to SP2-n), and SP3 (SP3-1 to SP3-n) of symbol 1 to symbol 3 stored in the storing means 410 will not be utilized in the transmission route characteristic estimation using a selected antenna. Namely, after an operation of changing a reception condition has been performed, it is not necessary to use past information not related to the present condition.

Therefore, as shown in Fig. 8, the information of the pilot signals SP of symbol 1 to symbol 3 are cleared. In fact, such a clearing can be effected by erasing data of the pilot signals SP of symbol 1 to symbol 3, by newly writing an invalid value such as "0." However, as shown in Fig. 8, immediately after an operation of changing a reception condition, only the information of pilot signals SP4 (SP4-1 to SP4-n) of the latest (one) symbol (symbol 4) is stored in the storing means 410.

On the other hand, as a result of the comparison performed by the judging means 412, when an operation of changing a reception condition is not performed (Step S504: No), clearing in Step S505 will not be performed, either, so that the process proceeds to Step S506. At this time, the information of pilot signals SP1-4 of four symbols is stored in the storing means 410.

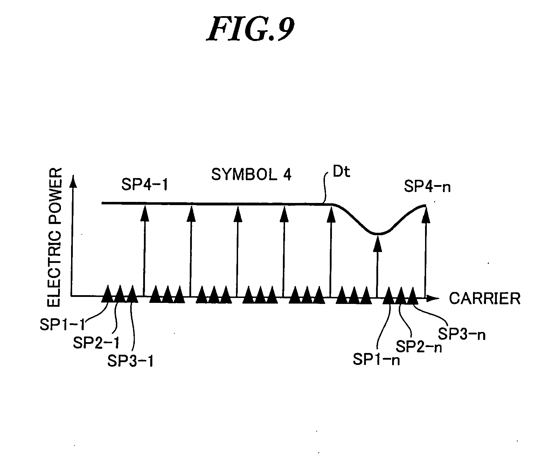

Then, each time pilot signals SP of one symbol are newly stored in the storing means 410, the transmission route characteristic estimating means 409 will estimate a transmission route characteristic using the information of pilot signals SP of all (1 to n) symbols stored in the storing means 410 (Step S506). Fig. 9 is a chart showing the information of pilot signals read out from the storing means at the time of estimating a transmission route characteristic. Specifically, Fig. 9 shows the contents read out at time of starting an operation of changing a reception condition. As shown in Fig. 9, what are read out are only pilot signals SP4 (SP4-1 to SP4-n) of the symbol 4.

The transmission route characteristic estimating means 409 operates to estimate a transmission route characteristic Dt in accordance with the information of pilot signals SP4 (SP4-1 to SP4-n) of the symbol 4 which has been read out (refer to Fig. 9). In this way, after performing an operation of changing a reception condition, it is possible to correctly estimate (calculate) a transmission route characteristic without being affected by the information contained in past symbols not related to the present condition.

However, if an operation of changing a reception condition is not performed, a transmission route characteristic will be estimated in accordance with the information of pilot signals SP1 (SP1-1 to SP1-n), SP2 (SP2-1 to SP2-n), SP3 (SP3-1 to SP3-n), and SP4 (SP4-1 to SP4-n) of four symbols from symbol 1 to symbol 4.

Although the above description has been given to explain an arrangement in which a transmission route characteristic is estimated in accordance with the information (complex carrier) of pilot signals of four symbols, it is also possible to estimate a transmission route characteristic using 1 ton symbols. For example, it is allowed to form an arrangement in which a transmission route characteristic is estimated by using 204 symbols corresponding to one frame.

In the above-described Embodiment 1, if the reception condition of the received signal output means 402 has been changed, the second control means 411 will operate to clear the information of pilot signals existing before the reception condition change and stored in the storing means 410. However, the present invention should not be limited to such a specific example. For example, if the reception condition of the received signal output means 402 has been changed, it is possible for the data stored in the storing means 410 to be maintained unchanged, and, when the transmission route characteristic estimating means 409 estimates a transmission route characteristic, it is allowed to remove the information of pilot signals existing before the reception condition change.

### [Embodiment 2]

In Embodiment 2, if a reception condition is changed when there is a correlation between an unchanged reception condition and a changed reception condition, an effect produced by past pilot signal information on the estimation of a transmission route characteristic is made smaller than an effect produced by the present pilot signal information (obtained after a reception condition has been changed) on the estimation of a transmission route characteristic. Namely, when there is a correlation between an unchanged reception condition and a changed reception condition, since it is allowed to consider that there is a correlation between a past pilot signal and the present pilot signal, the past pilot signal information can be used to estimate a transmission route characteristic after changing a reception condition. Here, as an example of having a correlation with a changed reception condition, it is allowed to consider a case in which a distance between antennas is within the half wavelength of a received electric wave of a transmission signal (if the receiver is an antenna switchover type) , and another case in which a signal synthesized ratio will be changed by changing the phase and level of a received signal (if the receiver is a phase difference feeding type).

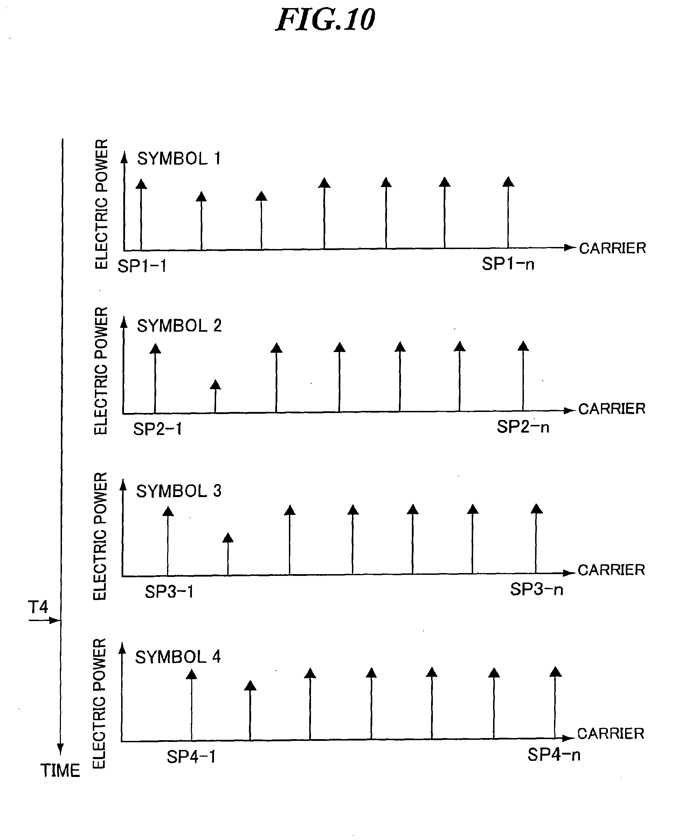

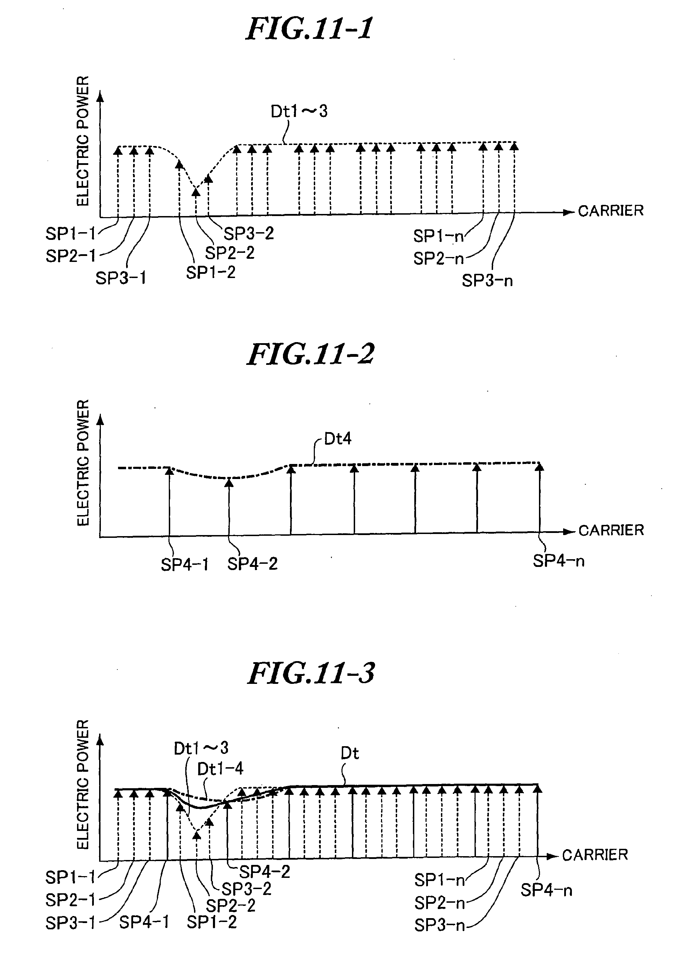

Fig.10 is a time chart showing a procedure for estimating transmission route characteristics, utilizing the pilot signals of a plurality of symbols according to Embodiment 2. As shown in Fig.10, similar to Embodiment 1, transmission route characteristics are estimated by storing the information of the pilot signals of 4 symbols. Fig. 11-1 is a chart showing transmission route characteristics estimated in accordance with past information. Actually, transmission route characteristics Dt 1 to 3 are estimated in accordance with the information of the pilot signals of past symbols (symbol 1 to symbol 3) stored until the start of an operation of changing a reception condition (time T4).

Fig.11-2 is a chart showing a transmission route characteristic estimated in accordance with the information obtained after changing a reception condition. In fact, a transmission route characteristic Dt 4 is estimated in accordance with the information of pilot signals of a new symbol (symbol 4) stored at the time of starting an operation of changing a reception condition (time T 4).

Fig.11-3 is a chart showing transmission route characteristics obtained by taking into account the degree of a certain effect. As shown in Fig.11-3, the transmission route characteristic estimation means 409 (refer to Fig. 5) obtains an overall transmission route characteristic by reducing an effect of the transmission route characteristics Dt 1 to 3 of past symbols, and increasing an effect of a transmission route characteristic Dt 4 of a new symbol. Specifically, such an overall transmission route characteristic may be obtained by at first reducing a rate of the values of the transmission route characteristics Dt 1 to 3 of past symbols (for example, 30 percent), and then, increasing a rate of the value of the transmission route characteristic Dt 4 of a new symbol (for example, 70 percent), followed by summing up these values thus obtained. In this way, the pilot signals of past symbols existing before changing a reception condition, can affect the estimation of a transmission route characteristic after a reception condition change, at a lower level than the pilot signal of a new symbol after the reception condition change.

In the case of Fig.10, since there is a correlation between an unchanged reception condition and a changed reception condition, it can be estimated even after changing a reception condition that a distortion is occurring on the transmission route between SP4-1 and SP4-2. However, at this time, a distortion on the transmission route between SP4-1 and SP4-2 can not be estimated correctly if utilizing only the transmission route characteristic Dt 4 of a pilot signal of a new symbol to estimate the transmission route characteristic right after changing a reception condition. Further, even if there is a correlation between an unchanged reception condition and a changed reception condition, since a transmission route characteristic is changing, if such a transmission route characteristic is estimated in accordance with all the pilot signals stored in the storing means 410 as in the above-described prior art, an effect produced by the pilot signals before a reception condition change will increase. As a result, it is impossible to correctly estimate a transmission route characteristic right after an operation of changing a reception condition. Accordingly, by estimating a transmission route characteristic after a reception condition change in a manner as described above such that a pilot signal of a past symbol will affect the estimation of a transmission route characteristic after the reception condition change at a lower level than a pilot signal of a new symbol, it is possible to estimate a correct transmission route characteristic by taking into account a distortion on the transmission route between SP4-1 and SP4-2.

Therefore, when a reception condition has been changed if there is a correlation between an unchanged reception condition and a changed reception condition, it is possible to use past information to estimate a transmission route characteristic appropriate for a new reception condition.

Besides, the aforementioned effect can also be set in accordance with a correlation degree or the like between an unchanged reception condition and a changed reception condition. In addition, it is also possible to find such a correlation degree between an unchanged reception condition and a changed reception condition from the information of the pilot signals existing before and after the changing of the reception condition, thereby determining such an effect from the correlation degree thus found.

In fact, as in the above-described Embodiment 1, an arrangement according to Embodiment 2 can either assume an antenna switchover type, or a phase difference feeding type capable of varying a synthesized ratio of a plurality of antennas.

Further, with regard to the above-described Embodiment 2, when the reception condition of the received signal output means 402 has been changed, a transmission route characteristic estimated from the information of a pilot signal of a past symbol stored before the changing of a reception condition, and a transmission route characteristic estimated from the information of a pilot signal of a new symbol stored after the changing of a reception condition, are summed up. However, this invention can also be constructed in other ways. For example, the invention can be constructed in a manner such that a transmission route characteristic after the changing of a reception condition can be estimated first by obtaining the information of a distortion on the transmission route from the information of a pilot signal of a past symbol, then by analyzing the information of the distortion on the basis of the transmission route characteristic estimated from the pilot signal of a new symbol.

According to the above-described embodiments, when a reception condition has been changed due to a change in a reception situation, it is possible to correctly estimate (calculate) a transmission route characteristic, and perform an equalization for preventing SNR from getting worse.

In practice, each of the above-described embodiments is based on an arrangement capable of receiving a transmission signal through an OFDM transmission system, especially through an ISDB-T transmission system containing pilot signals. Therefore, although the storing means 410 stores the information of 4 symbols corresponding to a rate (1/3 in frequency direction, 1/4 in time direction) of the pilot signals contained in the transmission signal of ISDB-T system, it is also possible to change and use the number of the symbols stored in the storage means 410, i.e., the number of symbols utilized for estimating a transmission route characteristic, in response to a rate of the pilot signals contained in transmission signals transmitted through other transmission systems. Apart from the above-described transmission system, a transmission signal thus received can also be applied to other transmission systems capable of performing an operation of changing a reception condition and carrying out an equalization, such as DVB-T transmission system or the like. Further, the receiver explained in the above embodiments can be used as a receiver capable of storing in a memory or the like some information (such as electric power, amplitude, and phase) of received signals accumulated from the past till present, and estimating (calculating) a transmission route characteristic by utilizing the information stored in the memory, irrespective of what modulating manner is in use.

Although a receiver with 1-tuner diversity was explained as an example in the above-described embodiment of the present invention, this embodiment can also be applied to a receiver having two tuners and 2-tuner diversity for synthesizing the outputs of a plurality of tuners, or can be applied to a receiver having more than two tuners.

In addition, the receiver explained in the present embodiment can be controlled, by executing a prepared reception controlling program in a computer such as a personal computer or the like. Such program may be recorded on a recording medium capable of being read by computers, such as hard disk, flexible disk, CD-ROM, MO, DVD and the like, and then, can be executed when being read out by the computer from one of the recording mediums described above. Moreover, this program may also be a transmission medium capable of being distributed by a network system, such as the Internet or the like.

As has been described above, the receiver, the receiving method, the reception control program, as well as the recording mediums (all formed according to the present embodiment), can be applied to an industrial field such as broadcasting and communication, and to a wide-band radio system or the like, besides a radio or television set and a navigation apparatus including the radio or television set. Especially, the receiver of the present invention provides a stable reception quality when being used as a receiver in a mobile body (such as car, train, ship and the like) or as a portable receiver wherein a reception state changes frequently.

## Claims

1. A receiver comprising:
a plurality of antennas (401a,401b) for receiving a transmission signal;
received signal output means (402) for outputting a received signal using one or more of the plurality of antennas (401a, 401b) ;
first control means (414) for controlling a reception condition of the received signal output means (402);
storing means (410) for storing the information of the received signal;
transmission route characteristic estimating means (409) for estimating a transmission route characteristic in accordance with the information of the received signal stored in the storing means (410); and
signal processing means (406) for processing the received signal in accordance with the transmission route characteristic estimated by the transmission route characteristic estimating means (409),
wherein when the reception condition of the received signal output means (402) is changed by the first control means (414), the transmission route characteristic estimating means (409) operates to estimate a transmission route characteristic based on a changed reception condition, without using the information of the received signal stored before the reception condition is changed.

2. The receiver according to claim 1, further comprising second control means (411) for controlling the storing means (410), wherein when a reception condition of the received signal output means (402) is changed by the first control means (414), the second control means (411) makes ineffective the information of the received signal stored before the reception condition is changed.

3. A receiver comprising:
a plurality of antennas (401a,401b) for receiving a transmission signal;
received signal output means (402) for outputting a received signal using one or more of the plurality of antennas (401a, 401b) ;
control means (414) for controlling a reception condition of the received signal output means (402);
storing means (410) for storing the information of the received signal;
transmission route characteristic estimating means (409) for estimating a transmission route characteristic in accordance with the information of the received signal stored in the storing means (410); and
signal processing means (406)for processing the received signal in accordance with the transmission route characteristic estimated by the transmission route characteristic estimating means (409),
wherein when the reception condition of the received signal output means (402) is changed by the control means (414), the transmission route characteristic estimating means (409) operates to estimate a transmission route characteristic, in a manner such that the information of the received signal stored before the reception condition is changed, can affect the estimation of the transmission route characteristic, at a lower level than the information of the received signal stored after the reception condition is changed.

4. The receiver according to any one of claims 1 to 3, further comprising extracting means (408) for extracting pilot signals contained in the received signal, wherein the storing means (410) stores several symbols of the information of the pilot signals extracted as the information of the received signal.

5. The receiver according to claim 4, wherein the storing means (410) stores a predetermined number of symbols of the information of the pilot signals in a manner such that the information can be updated.

6. A receiving method comprising:
a received signal outputting step of outputting a received signal using one or more of a plurality of antennas (401a,401b) for receiving a transmission signal;
a controlling step of controlling a reception condition of the received signal outputting step;
a storing step of storing the information of the received signal;
a transmission route characteristic estimating step of estimating a transmission route characteristic in accordance with the information of the received signal stored in the storing means; and
a signal processing step of processing the received signal in accordance with the transmission route characteristic estimated in the transmission route characteristic estimating step,
wherein when the reception condition of the received signal outputting step is changed in the controlling step, the transmission route characteristic estimating step estimates a transmission route characteristic, without using the information of the received signal stored before the reception condition is changed.

7. A receiving method comprising:
a received signal outputting step of outputting a received signal using one or more of a plurality of antennas (401a,401b) for receiving a transmission signal;
a controlling step of controlling a reception condition of the received signal outputting step;
a storing step of storing the information of the received signal;
a transmission route characteristic estimating step of estimating a transmission route characteristic in accordance with the information of the received signal stored in the storing step; and
a signal processing step of processing the received signal in accordance with the transmission route characteristic estimated in the transmission route characteristic estimating step,
wherein when the reception condition of the received signal outputting step is changed in the controlling step, the transmission route characteristic estimating step estimates a transmission route characteristic, in a manner such that the information of the received signal stored before the reception condition is changed, can affect the estimation of the transmission route characteristic, at a lower level than the information of the received signal stored after the reception condition is changed.

8. A reception control program enabling a computer to execute the receiving method recited in claim 6 or 7.

9. A storage medium having stored therein the reception control program recited in claim 8.
